Europäisches Patentamt

European Patent Office

Office européen des brevets

(11) Publication number: **0 117 838**
A1

# (12) EUROPEAN PATENT APPLICATION

(21) Application number: 84730005.0

(22) Date of filing: 26.01.84

(51) Int. Cl.³: **B 29 F 1/00,** B 05 D 1/08, B 32 B 15/08

(30) Priority: 28.01.83 JP 13044/83

(43) Date of publication of application: 05.09.84 Bulletin 84/36

(84) Designated Contracting States: BE DE FR GB SE

(71) Applicant: **MITSUBISHI JUKOGYO KABUSHIKI KAISHA,** 5-1, Marunouchi 2-chome Chiyoda-ku, Tokyo (JP)

(72) Inventor: **Togawa, Satoshi c/o Nagoya Machinery Works, Mitsubishi Jukogyo 1, Aza-Takamichi Iwatsuka-cho, Nakamura-ku Nagoya City Aichi Pref. (JP)** Inventor: **Takagi, Koichi c/o Nagoya Machinery Works, Mitusbishi Jukogyo 1, Aza-Takamichi Iwatsuka-cho, Nakamura-ku Nagoya City Aichi Pref. (JP)**

(74) Representative: **Meissner, Peter E., Dipl.-Ing. et al, Herbertstrasse 22, D-1000 Berlin 33 (DE)**

(54) Injection molding method and molded articles thereby.

(57) An injection molding method for a synthetic resin having the surface of an inorganic material such as a metal, comprising the steps of previously spraying the inorganic material onto the molding surface of a mold in order to form an inorganic material layer thereon, and injection molding the synthetic resin to integrally associate it with the inorganic material layer, the spraying of the inorganic material being accomplished under controlled spraying conditions so as to increase a roughness on the surface of the inorganic material layer which is in contact with the synthetic resin and to thereby provide the synthetic resin with an anchor effect; and molded articles which have been obtained by this method.

ACTORUM AG

The present invention relates to an improvement in an injection molding method.

Heretofore, coating the surfaces of synthetic resins with inorganic materials such as metals has widely been carried out with the aims of giving a metallic appearance and conductivity to them and increasing their mechanical properties wear resistance, hardness, bending strength, impact strength, etc., thermal resistance, weathering resistance, water absorption properties and hygroscopicity, corrosion resistance and the like. However, coating methods which have conventionally been utilized for injection molded articles of the synthetic resins are based on applying, to the surfaces of the injection molded resins, depositions in a broad sense (dipping process, metal spraying, spattering, vacuum deposition, chemical plating, electric plating, etc.

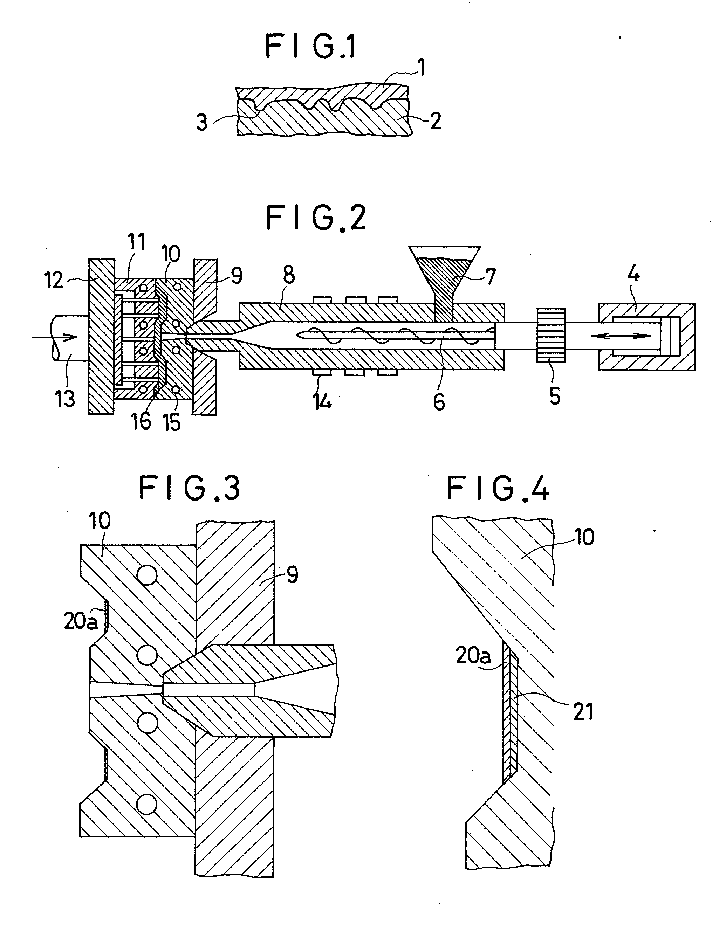

In these methods above, however, it has been necessary to etch the plastic surfaces with the intention of providing metallic coatings with an anchor effect, as shown in Figure 1 attached here, alternatively other treatments have been required, for the purpose of preventing a peeling phenomenon which will occur due to a shearing force between a deposited metallic layer and a plastic matrix on the basis of a temperature change, which shearing force will result from a difference of a thermal expansion

- 2 -

coefficient between the metallic layer and the plastic matrix.

When it is contemplated to plate the plastics which are non-conductive, combination methods of a chemical plating and an electroplating have prevalently been utilized. One example of these methods is set forth in Table 1 below.

Table 1

| Process | Remarks |
|---------|---------|
| Pretreatment | Washing for degreasing, and drying |
| Etching | Elution is chemically accomplished by mixing an additive with a synthetic resin. Alternatively, etching is physically carried out directly on the surface of the synthetic resin. |
| Chemical plating | 1. Neutralization (which is carried out in the case of chemical plating)<br>2. Sensitizing<br>3. Activating<br>These operations in the previous paragraphs 2 and 3 are carried out to accelerate a chemical reaction.<br>4. Chemical plating |
| Electroplating | 1. Copper plating (which is carried out for the improvement in an adhesion to a chemically plated coating)<br>2. Nickel plating<br>3. Chromium plating |

0117838

Basically, the combination method consists of four processes of a pretreatment, etching, chemical plating and electroplating, and each process further includes a plurality of steps. For this reason, the development of simple methods has been desired by which an inorganic material coating such as a metal is deposited on the surface of the synthetic resin, and such a desire has been particularly strong for articles which can be mass-produced.

The present invention which is here suggested can eliminate drawbacks of the aforementioned conventional methods.

According to the present invention, there is provided an injection molding method for a synthetic resin having the surface of an inorganic material such as a metal, comprising the steps of previously spraying the inorganic material onto the molding surface of a mold in order to form an inorganic material layer thereon, and injection molding the synthetic resin to integrally associate it with the inorganic material layer, the spraying of the inorganic material being accomplished under controlled spraying conditions so as to increase a roughness on the surface of the inorganic material layer which is in contact with the synthetic resin and to thereby provide the synthetic resin with an anchor effect, whereby a peeling phenomenon of the deposited metallic layer from the plastic matrix is prevented and the preparation of the inorganic layer can easily be achieved.

Further, according to the present invention, there are provided injection molded articles of a synthetic resin having the surface of an inorganic material such as a metal, the inorganic material surface being provided, on its side contiguous to the synthetic resin, with coarse pores which have been formed by spraying, thereby providing the synthetic resin with an anchor effect.

Other objects and features of the present invention will be understood from the following description about an embodiment in reference to accompanying drawings, in which:

Figure 1 is a sectional view illustrating a structure in which a synthetic resin is coated on the surface thereof with a metal;

Figure 2 is a sectional side view of an injection molding machine for carrying out a method according to the present invention;

Figure 3 is an enlarged section of the main portion of the machine exhibited in Figure 2;

Figure 4 is an enlarged section of the main portion of the machine exhibited in Figure 3;

Figure 5 is a perspective view of a synthetic resin article prepared by the injection molding machine exhibited in Figure 2;

Figure 6 is a sectional side view of the article exhibited in Figure 5;

Figure 7 is an enlarged sectional view of the coarse surface of copper which has roughly been sprayed on a metal surface;

Figure 8 is an enlarged sectional view of the smooth surface of copper which has finely been sprayed on a metal surface;

Figures 9 and 10 are enlarged photographies corresponding to Figures 7 and 8, respectively.

Referring first to Figure 1 which is an enlarged explanatory view indicating the structure where a synthetic resin is coated on the surface thereof with a metal, reference numeral 1 is the metal, numeral 2 is the synthetic resin, and 3 is a recess on the surface of the synthetic resin.

Figure 2 is a sectional view illustrating a functional principle of an injection molding machine for carrying out a method according to the present invention, and reference numeral 4 is a hydraulic cylinder, numeral 5 is a driving gear, 6 is a screw, 7 is a feeding member, 8 is a cylinder, 9 is a mold fitting plate, 10 is a cavity mold, 11 is a core mold and 12 is a mold fitting plate, 13 is an open-close member for the core mold 11, 14 is a heater, 15 is a cooling pipe and 16 is a molded synthetic resin article.

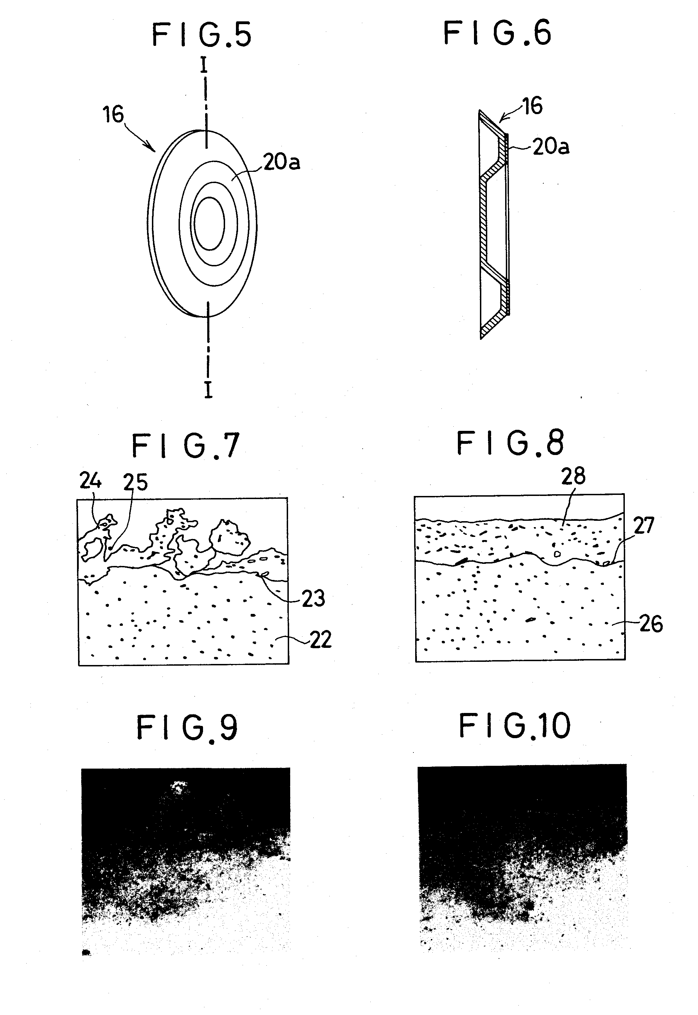

Figure 3 is an enlarged sectional view of the cavity mold 10, and reference numeral 20a represents an inorganic layer which has been sprayed. Likewise, Figure 4 is an explanatorily enlarged view of the sprayed inorganic material layer in a cavity mold 10, and reference numeral 21 represents a parting agent. Figure 5 is a perspective view of the synthetic resin article 16, and Figure 6 is an enlarged sectional view taken along line I - I in Figure 5.

Figure 7 is an enlarged sectional view of the coarse surface of copper which has roughly been sprayed on a metal surface, and reference numeral 22 is a metallic material, numeral 23 is a boundary line, 24 is the sprayed copper and 25 is a pore. Figure 8 is an enlarged sectional view of the structure when fine spraying has been made, and reference numeral 26 is a metallic material, numeral 27 is a boundary line and 28 is a sprayed copper. Further, Figures 9 and 10 are photographs exhibiting hundredfold enlarged sectional views of the structures corresponding to Figures 7 and 8, respectively.

Next, reference to the function of the present invention will be made. In the injection molding machine illustrated in Figure 2, the synthetic resin material is fed to the cylinder 8 through the feeding member 7, and is molten by the heater 14 while forwarded by the screw 6 in the cylinder 8. The molten material is then injected into a space between the molds 10 and 11 by force of the hydraulic cylinder 4. After its cooling and hardening, the core mold 11 is moved so as to separate from the cavity mold 10, and the molded synthetic resin article 16 is then removed therefrom.

In the instance where the present invention is concerned, the inorganic material is sprayed toward a predetermined position of the mold in the aforesaid process, with the molds 10 and 11 opened. Subsequently, the injection molding operation just described is carried out, thereby integrally associating the inorganic material with the molded synthetic resin article. The molded synthetic resin articles obtained according to the present invention can be fed to fields where features of the inorganic material are utilized.

For example, as shown in Figures 5 and 6 above, molding the synthetic resin article so that it may be integrally associated with the sprayed inorganic material layer is carried out as follows: First, as seen in Figure 4, the parting agent 21 such as a clear lacquer, colloidal silica or the like is sprayed, as thick as several microns, onto the cavity mold 10 to form a coating thereon, and the inorganic material 20a is sprayed over the thus formed parting agent coating in order to form a disc-like thin plate on the mold surface with the interposition of the parting agent coating. At the next step, the cavity mold 10 and the core mold 11 are closed airtightly, and the synthetic resin is injected thereinto and molded to prepare an article integrally associated with the inorganic material, which is then removed therefrom.

Generally, in such a case an adhesion between the sprayed inorganic layer and the synthetic resin is substantially bad.

That is to say, with regard to the sprayed simple and smooth inorganic layer which has not undergone any particular control as in conventional cases, it does not adhere sufficiently to the synthetic resin layer, with the result that a shearing stress occurs between both the layers by force of a deformation due to a stress or by a difference of a thermal expansion coefficient between the respective materials at the time of a temperature change, so that a peeling phenomenon tends to appear on the resin layer.

In the present invention, for the purpose of preventing this trouble, the fine spraying of the inorganic material is accomplished toward the mold side, i.e. the front side of the injection molded article, as shown in Figure 8, and the rough spraying of the inorganic material is done toward the side which will be in contact with the synthetic resin, as shown in Figure 7. At this time, the synthetic resin generally gets into open cell clearances of approximately 0.05 mm or more, but does not penetrate through pores finer than this size, depending on the employed synthetic resin material, desired article shape and injection molding conditions (an injection temperature, pressure, mold temperature, etc.). Therefore, into such coarse pores (e.g., 0.05 to 0.1 mm in size) as seen in the photograph of Figure 9, the synthetic resin can sufficiently stream and can be joined to the sprayed inorganic material layer with a strong anchor effect on the rugged surface of the inorganic layer. Incidentally, the sprayed coarse inorganic material surface shown in Figure 9 appears to be easily destroyed, but the joining strength between the inorganic layer and the resin layer is enough great, because they are combined with each other on the basis of their stereostructure.

As the inorganic materials to be sprayed, there can be utilized metallic materials (Fe, Al, Cu, Zn, Sn, alloys thereof, etc.), ceramics ($Al_2O_3$, $SiO_2$, TiO, WC, $CrO_2$, ZrO, TiC, etc.) and cermets in compliance with uses, but it is preferred that differences between melting points and hardnesses of the mold surface and the sprayed inorganic material are large for purposes of holding down, to a low level, the roughness of the sprayed inorganic material layer surface on the side of the mold and permitting the life span of the mold to lengthen.

When in a certain combination of the layers, these differences just described are great (according to experiments, when copper is sprayed to the steel mold having alloy tools), the sprayed inorganic material will be hard to adhere to the mold surface. Therefore, the inorganic layer with which the synthetic resin is integrally associated can be separated from the mold surface without using any parting agent. It is thus fair to say that some inorganic materials to be sprayed permit omitting such a parting agent as shown in Figure 4.

As means for the spraying, there can be employed wire arc spraying, or flame spraying, electric arc spraying, plasma spraying and the like for powdery materials in compliance with the kinds of inorganic materials to be sprayed.

The formation of the sprayed rough inorganic layer can usually be accomplished by virtue of the increase in a feeding rate of the inorganic material to the spraying means, the drop in a melting temperature and the extension of a distance from the spraying means (a tip of its nozzle) to a thing onto which the inorganic material will be sprayed, on the basis of spray conditions of the fine layer (which void volume is within the range of 4 to 10%). Proper conditions of the rough layer formation can be set taking, into consideration, a balance of a strength and a roughness of the sprayed inorganic material layer.

Further, a range and a shape of the inorganic material spraying in the mold can be determined in the same masking manner as in the case of conventional painting techniques. Furthermore, the roughness on the coarse inorganic layer which has been described above varies with kinds of synthetic resins and conditions of the injection molding, therefore it is not limited to the above specified numerical values. In short, the satisfactory roughness is such that the synthetic resin gets into the pores on the rough surface of the sprayed inorganic layer in order to provide the resin with the anchor effect.

What is claimed is:

1. An injection molding method for a synthetic resin having the surface of an inorganic material such as a metal, comprising the steps of previously spraying said inorganic material onto the molding surface of a mold in order to form an inorganic material layer thereon, and injection molding said synthetic resin to integrally associate it with said inorganic material layer, said spraying of the inorganic material being accomplished under controlled spraying conditions so as to increase a roughness on the surface of said inorganic material layer which is in contact with said synthetic resin and to thereby provide said synthetic resin with an anchor effect.

2. Injection molded articles of a synthetic resin having the surface of an inorganic material such as a metal, said inorganic material surface being provided, on its side contiguous to said synthetic resin, with coarse pores which have been formed by spraying, thereby providing said synthetic resin with an anchor effect.

FIG.1

FIG.2

FIG.3

FIG.4

FIG.5

FIG.6

FIG.7

FIG.8

FIG.9

FIG.10

# EUROPEAN SEARCH REPORT

**European Patent Office**

## DOCUMENTS CONSIDERED TO BE RELEVANT

EP 84730005.0

| Category | Citation of document with indication, where appropriate, of relevant passages | Relevant to claim | CLASSIFICATION OF THE APPLICATION (Int. Cl. ³) |
|---|---|---|---|
| X | DE - A1 - 2 927 983 (MESSER-SCHMITT) <br> * Totality * <br> -- | 1,2 | B 29 F 1/00 <br> B 05 D 1/08 <br> B 32 B 15/08 |
| A | DE - B2 - 2 553 007 (ADEBAR) <br> * Totality * <br> -- | | |
| A | DE - A1 - 3 127 557 (MESSER-SCHMITT) <br> * Totality * <br> ---- | | |

|  | TECHNICAL FIELDS SEARCHED (Int. Cl. ³) |
|---|---|
| | B 05 D <br> B 29 C <br> B 29 F <br> B 44 C |

The present search report has been drawn up for all claims

| Place of search | Date of completion of the search | Examiner |
|---|---|---|
| VIENNA | 09-05-1984 | MAYER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82